# EUROPEAN PATENT SPECIFICATION

(11) **EP 2 862 543 B1**
(45) Date of publication and mention of the grant of the patent: **19.09.2018**
(21) Application number: 14188194.6
(22) Date of filing: 08.10.2014
(51) Int. Cl.: A61C 17/02, A61C 1/00

(54) **Apparatus for dental hygiene**
Vorrichtung für Zahnhygiene
Appareil d'hygiène dentaire

(30) Priority: 16.10.2013 IT MI20131721; 03.10.2014 IT MI20141730
(43) Date of publication of application: 22.04.2015
(73) Proprietor: EB2C S.r.l., 20121 Milano (IT)
(72) Inventor: Germini, Giorgio, 20121 MILANO (IT)
(74) Representative: Long, Giorgio

(56) References cited:
- WO-A2-2005/032393
- JP-A- 2013 126 502
- US-A1- 2009 070 949

## Description

The present invention relates to an equipment usable for both domestic and professional dental hygiene. In particular, the invention relates to a hydropulser with hygienizing properties.

Hydropulsers are apparatuses that are widely used both in the professional (dental practice offices) and household field. Hydropulsers dispense water at a variable pressure, i.e., water pulses, by suitable nozzles so as to accurately direct the jet onto the teeth and gums. These devices are also recommended by dentists, as they represent the best alternative to flossing.

In fact, the water jet of the hydropulsers is powerful enough to remove the food residues, dental plaque, and other dental intrusions that a standard toothbrush cannot remove.

Hydropulsers are also known, especially for professional use, which mix small amounts of ozone to the dispensed water, in order to add a disinfection function to the equipment. These devices are particularly efficient in the case of oral cavity infections or a pre-or post-dental implant treatment.

A hydropulser is known from WO 2005/032393 A2.

Studies show that ozone is useful in the treatment of surface caries, promotes healing and re-epithelialization of wounds, and facilitates a professional prophylaxis. Other studies have shown that, by combining a professional dental cleaning with daily rinses of the oral cavity with ozonized water, it is possible to improve the clinical picture in the gingivites and periodontites.

These properties are conferred by the very high oxidizing power of ozone and by the high water solubility (greater than that of oxygen), which allows easily obtaining of ozonized water with amounts of dissolved ozone sufficient for an effective disinfecting action. On the other hand, its rapid decomposition by metal ions and by reaction with thiols that are present in the body (reduced glutathione, GSH, or cysteine, for example) allow fast detoxification, making the use thereof in controlled amounts completely harmless.

Hydropulsers for household use are commercially available, but they suffer from various problems that make the use thereof impractical and not very effective.

A first problem is given by the fact that the water flow is dispensed at a variable and often too high pressure, so as to perform an adverse action, thereby it can easily push, and thus leave food residues deposited inside the gingival sulcus. This problem is mainly due to the use of piston pumps, the flow rate of which is quite low and the pressure is quite high.

Furthermore, the commercial apparatuses have a reduced operation flexibility due to an approximate control of the settings and, combined to the choice of components, a poor reliability, which configures them almost as disposable devices used in the sense that, in the event of a fault, the only alternative is a complete replacement of the equipment.

The present invention addresses these problems and solves them by an oral hygiene equipment as defined in the appended claims, the definitions of which are an integral part of the present description.

An object of the invention is an oral hygiene equipment, comprising a hydropulser system to which a ozonization system is connected, wherein the hydropulser system comprises a reservoir for the water in flow communication with a pump, the pump being connected to a treatment device for dispensing a ozonized water flow, wherein the pump is a centrifugal pump.

A further object of the invention is an oral hygiene equipment, comprising a hydropulser system to which a ozonization system is connected, wherein the hydropulser system comprises a water reservoir in flow communication with a pump, the pump being connected to a treatment device for dispensing a ozonized treatment water flow, and wherein the ozonization system comprises a ozone generator, wherein the equipment comprises a driving and control unit driving the operation of the hydropulser system and the ozonization system and that performs the following functions:
- it reads the current absorbed by the pump, detects the absence of water in the reservoir or the failed insertion of the treatment device, and generates a malfunctioning signal;
- it reads the current absorbed by the ozone generator, detects the degradation of the ozone generator, and generates a malfunctioning signal.

Further characteristics and advantages of the present invention will be more apparent from the description of a preferred embodiment, given herein below by ways of illustrative, non-limiting example, with reference to the following figures, in which:
Fig. 1 represents a block diagram of the equipment according to the invention;
Fig. 2 represents an exploded perspective view of an embodiment of the equipment of the invention;
Fig. 3 represents a block diagram of the driving and control system of the equipment of Fig. 1;
Fig. 4 represents a block diagram of the equipment of the invention according to a different embodiment;
Fig. 5 represents a block diagram of the driving and control system of the equipment of Fig. 4;
Fig. 6 represents a perspective view in transparency of a detail of the equipment of the invention.

With reference to the figures, the oral hygiene equipment according to the invention, generally indicated with the numeral 1, comprises a hydropulser system 2 to which a ozonization system 3 is connected.

The hydropulser system 2 comprises a water reservoir 4 in flow communication with a pump 5, which sends a treatment water flow to a treatment device 6.

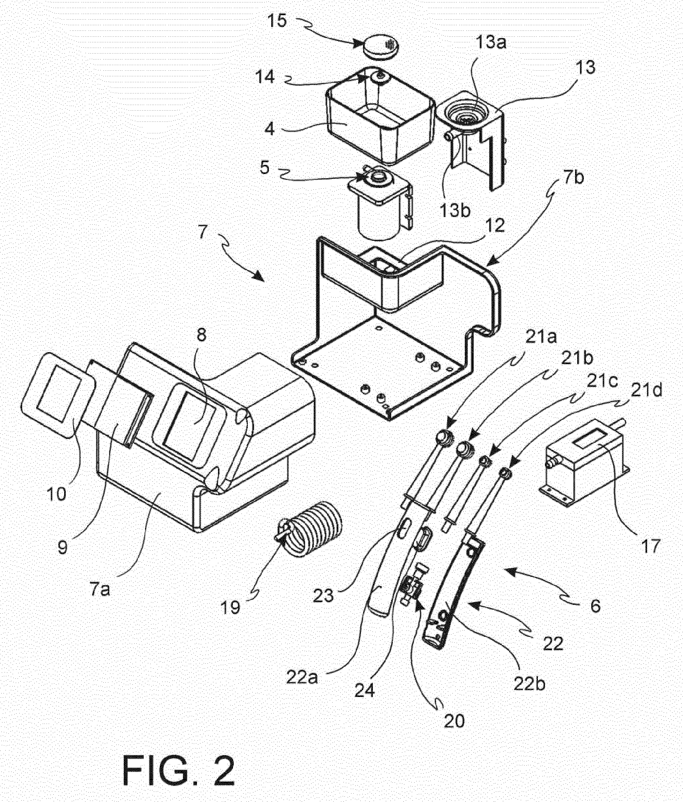

The hydropulser system 2 and the ozonization system 3 are contained in a casing 7. In the embodiment of Fig. 2, the casing 7 is composed of a front half-shell 7a and a rear half-shell 7b.

The front half-shell 7a comprises a display window 8 on which a touch-screen 9 can be applied, which may be in turn coated by a protection screen 10.

The rear half-shell 7b comprises a housing 12 for the pump 5. A connecting bracket 13, located between the reservoir 4 and the pump 5, provides for putting the reservoir 4 in flow communication with the pump 5, and, at the same time, for securing the pump 5 in the housing 12. To this aim, the connecting bracket 13 comprises a manifold 13a conveying the water to the pump 5 by a sprout 13b.

The two half-shells 7a, 7b can be assembled by screw-screw nut or snap-coupling systems.

The reservoir 4 is superiorly open to allow the manual loading and topping of water, and it comprises a hole on the bottom (not visible in the drawing) on which an automatic closure valve 14 and a water filter 15 are arranged. Such valve has the function to avoid the water from falling from the small holding tub when it is not is in its seat. In this manner, the reservoir connects to the manifold 13a of the connecting bracket 13.

The water pump 5 is preferably a centrifugal pump. This kind of pump, besides being much more silent than the piston pumps that are normally used, allows generating a much more stable pressure, both under the closed circuit condition and under operative conditions. Commercial centrifugal pumps will be able to be used, having dimensions small enough to be mounted in the housing 12 and able to dispense a water flow at a maximum pressure of 800-900 mbar.

The ozonization system 3 comprises a ozone generator 17 connected to an environmental air inlet opening 18. The ozone generator 17 produces ozone by electric discharges by a "corona effect".

In certain embodiments, air is suctioned with a flow rate up to 1,4 L/min, and ozone is produced in amounts ranging between 30 mg/hr and 250 mg/hr. The produced amount of ozone depends on both the current and the voltage applied to the ozone generator 17, and on the environmental conditions.

Under high temperature and low moisture rate conditions, the produced amount of ozone increases considerably. Another crucial factor is the flow rate of the air flow: the produced amount of ozone increases as the flow rate decreases.

For example, the Table 1 shows the ozone production data under several environmental and air flow rate conditions.

| **TABLE 1** | | | | |
|---|---|---|---|---|
| | Dry air 20∼25°C 10% RH | | Environmental air 25°C60%RH | |
| Gas flow | Ozone Conc. | Ozone flow | Ozone Cone. | Ozone flow |
| L/min | mg/L | g/h | mg/L | g/h |
| 0.5 | 4.82 | 0.14 | 2.7 | 0.08 |
| 0.8 | 4.26 | 0.2 | 2.25 | 0.11 |
| 1 | 3.98 | 0.24 | 2.12 | 0.13 |
| 1.5 | 2.78 | 0.25 | 1.28 | 0.12 |
| 2 | 2.33 | 0.28 | 0.94 | 0.11 |

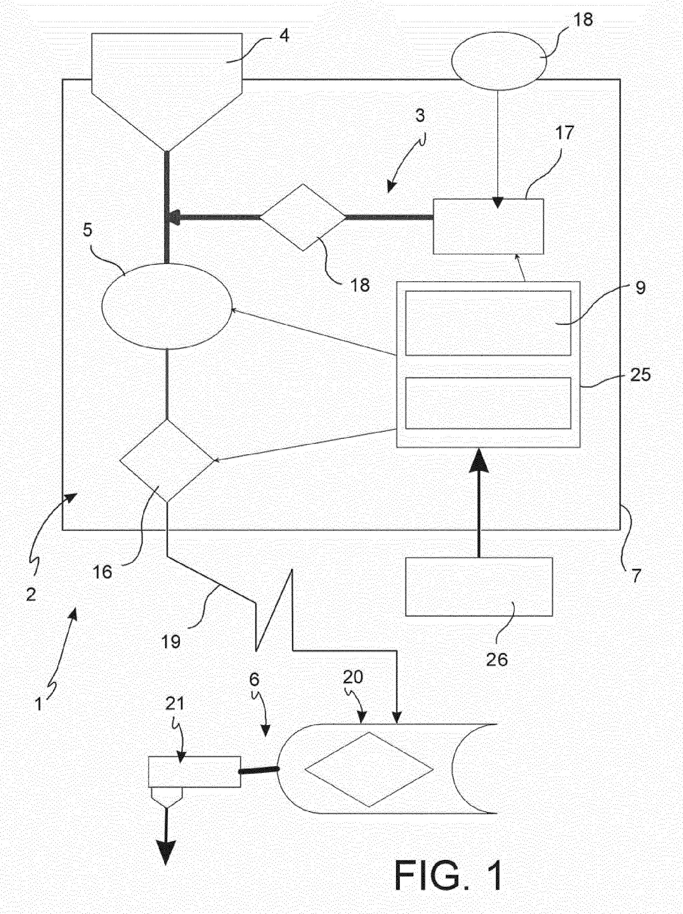

According to some embodiments, the ozone generator 17 sends an ozonized air flow upstream of the pump 5, as shown in Fig. 1. The ozonized air flow is intercepted by a non-return valve 32, and it is mixed with the water entering the water pump 5 by a Venturi effect device, for example, a Venturi tube.

The centrifugal pump 5 allows an efficient mixing of the gas flow in the liquid one. The amount of mixed air may vary from 1% to 50% by volume, with respect to the water volume. The average ozone concentration in the treatment water flow is less than 3.0 mg/L, more preferably about 3.0 ppm.

In some embodiments, as shown in Fig. 1, the treatment water flow is intercepted, downstream of the water pump 5, by an electrovalve 16.

The treatment device 6 is connected to the water pump 5, optionally by the interposition of the valve 16, by means of a flexible tube 19 exiting the casing 7.

The treatment device 6 comprises an opening-closure valve 20 and a dispensing head 21.

The opening-closure valve 20 is enclosed in a handle 22 formed by two half-shells 22a, 22b, on one of which half-shells 22a a window 23 is arranged, from which a driving push button 24 projects, for opening-closing the valve 20. The valve 20 is typically in a closure condition and it is brought to the opening condition by pressing the push button 24. By releasing the push button 24, the valve comes back to the closure condition. A mechanism of this type is widely known in this field of the art, hence it will not be described in more detail. The dispensing head 21 is interchangeable. Several heads 21 can be provided for, according to the function that is desired to be carried out. For example, the head 21a is a rotary head; the head 21b is a massaging head; the head 21c is a dispensing nozzle of a conventional type; the head 21d is a microjet nozzle.

Both the rotary head 21a and the massaging head 21b have a rotary movement, but the rotational speeds change depending on the water pressure.

The operation of the equipment of the invention is driven by a driving and control unit 25 actuatable by the touch-screen 9.

The driving and control unit 25 drives the operation of the pump 5, the ozone generator 17 and, if present, the electrovalve 16.

The driving and control unit 25 drives the pump 5 speed so as to generate the pulses at the desired frequency or, alternatively, a continuous flow at a predetermined flow rate and pressure.

The driving and control unit 25 further actuates the electrovalve 16 in order to generate high-frequency pulses.

Furthermore, the driving and control unit 25 actuates the ozone generator 17 by setting the current and voltage values applied thereto, so as to change the produced amount of ozone.

In addition, the driving and control unit 25 detects malfunctioning events of the hydropulser system 2 and the ozonization system 3. Particularly, the driving and control unit 25:
- reads the current absorbed by the pump 5, detects the absence of water in the reservoir 4 or the failed insertion of the dispensing head 21, and sends a malfunctioning signal to the touch-screen 9, optionally, stops the operativeness of the pump 5;
- reads the current absorbed by the ozone generator 17, detects the degradation of the ozone generator 17, and sends a malfunctioning signal to the touch-screen 9.

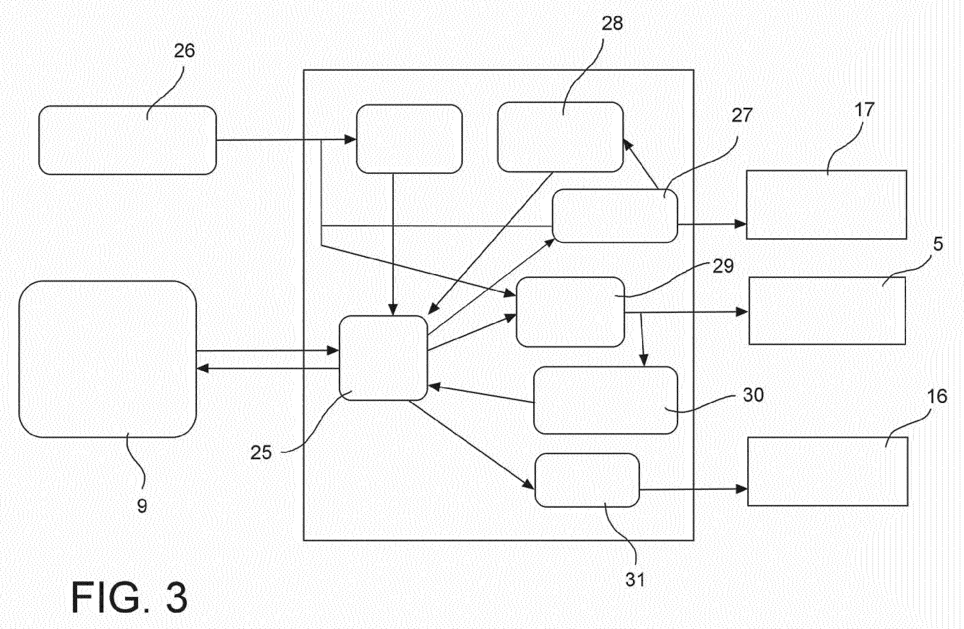

A simplified scheme of the driving and control system of the unit 25 is shown in Fig. 3.

A low-voltage supply system 26 serves to provide the power supply necessary for the operation of the hydropulser system 2, the ozonization system 3, and the driving and control unit 25.

The driving and control unit 25 receives commands from and sends control signals to the touch-screen 9.

The system further comprises:
a) a driver 27 of the ozone generator 17 that sends a control feed-back to a first absorbed current meter 28, which, in turn, sends a control feed-back to the unit 25;
b) a driver 29 of the pump 5, driven by the unit 25, which sends a control feed-back to a second absorbed current meter 30, which, in turn, sends a control feed-back to the unit 25;
c) a driver 31 of the electrovalve 16, driven by the unit 25.

The drivers 27, 29, 31 actuate the ozone generator 17, the pump 5, and the electrovalve 16, respectively.

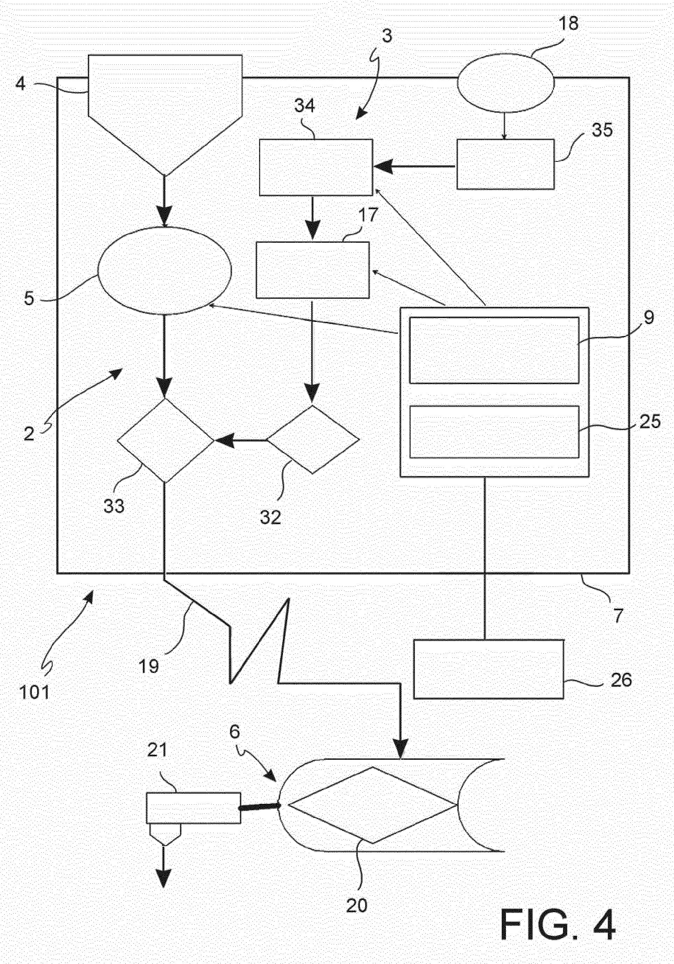

In a different embodiment, the block diagram of which is shown in Fig. 4, in which like elements are identified by the same numeral references of the version of Fig. 1, the oral hygiene equipment according to the invention, generally indicated by the numeral 101, comprises a hydropulser system 2 to which a ozonization system 3 is connected.

The hydropulser system 2 comprises a water reservoir 4 in flow communication with a pump 5, which sends a treatment water flow to a treatment device 6.

The hydropulser system 2 and the ozonization system 3 are contained in a casing 7. In this embodiment also, the casing 7 may be as shown in Fig. 2, the description of which is fully referred to.

The equipment 101 comprises a touch-screen 9.

The reservoir 4 is superiorly open to allow the manual loading and topping of water, and it comprises a hole on the bottom (not visible in the drawing) on which an automatic closure valve 14 (see Fig. 2) and a water filter 15 are arranged. Such valve has the function of avoiding water from falling from the small holding tub when it is not in its seat.

In some embodiments, the pump 5 is a centrifugal pump. Commercial centrifugal pumps will be able to be used, having dimensions small enough to be mounted in the housing 12 and able to dispense a water flow at a pressure of at least 800 mbar.

The ozonization system 3 comprises an ozone generator 17 connected to an environmental air inlet opening 18. The ozone generator 17 produces ozone by electric discharges by a "corona effect".

In some embodiments, the air is suctioned with a flow rate up to 1.4 L/min, and ozone is produced in amounts ranging between 30 mg/hr and 250 mg/hr. The produced amount of ozone depends on both a change in the current and voltage applied to the ozone generator 17, and as a function of the environmental conditions.

As stated above, under high temperature and low moisture rate conditions, the produced amount of ozone increases considerably. Another crucial factor is the flow rate of the air flow: the produced amount of ozone increases as the flow rate decreases. The Table 1 illustrated above shows the ozone production data under several environmental and air flow rate conditions.

The air coming from the inlet opening 18 is intercepted by a filter 35, providing for the reduction or elimination of the powders, which would pollute the equipment, and the moisture, which, as stated, would decrease the ozone yield of the equipment. For example, the filter will be of the gore-tex® membrane type.

An air pump 34 is arranged between the filter 35 and the ozone generator 17, the function of which is to ensure a constant air flow, preferably at a pressure of about 400-600 mbar.

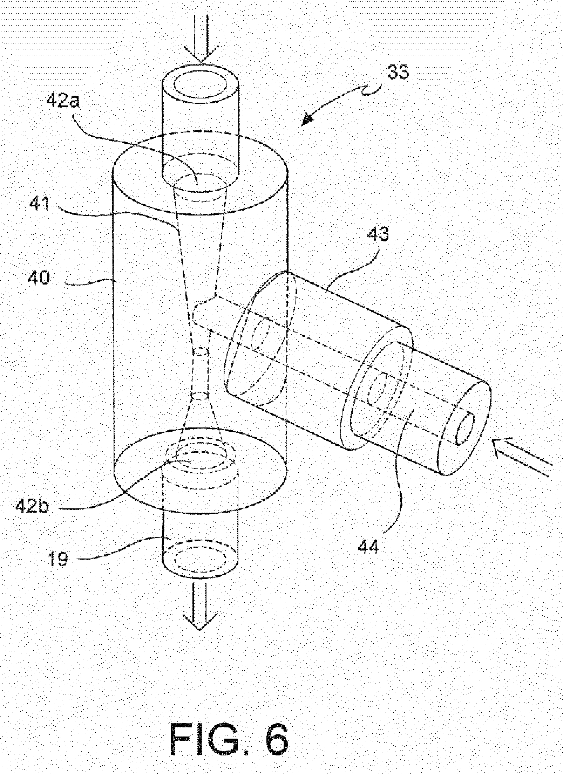

A Venturi effect device 33 is arranged downstream of the water pump 5. The Venturi effect device 33 is of a known type, for example, a conventional Venturi tube, or a Venturi effect device as shown in Fig. 6.

In some embodiments, the Venturi effect device will comprise very abrupt cross-sectional variations (e.g., a diaphragm) to generate abrupt speed variations.

An embodiment of the Venturi effect device 33 of the invention is shown in Fig. 6.

The device 33 comprises a main body 40, in which a Venturi tube 41 is obtained, having a hourglass-shaped profile. The Venturi tube 41 has an inlet opening 42a of the water to be treated coming from the pump 5, and an outlet opening 42b of the ozonized water that is sent into the tube 19.

A secondary body 43 is connected to the main body 40, in which a duct 44 is obtained, into which the ozonized air is introduced. The duct 44 opens into the Venturi tube 41 at the minimum diameter section thereof, or immediately upstream thereof.

The ozone generator 17 sends an ozonized air flow downstream of the pump 5, as shown in Fig. 4, at the Venturi effect device 33. The ozonized air flow is intercepted by a non-return valve 32, and it is mixed with water at the Venturi effect device 33. In this manner, an optimum dispersion of ozone in the water is obtained.

The amount of mixed air may range from 1% to 50% by volume, with respect to the water volume. The average concentration of ozone in the treatment water flow is less than 3.0 mg/L, more preferably about 3.0 ppm.

Downstream of the Venturi effect device 33, the ozonized water flow is channeled into a flexible tube 19 exiting the casing 7, and it ends at the treatment device 6.

The treatment device 6 comprises an opening-closure valve 20 and a dispensing head 21.

As in the embodiment described above, the opening-closure valve 20 is enclosed in a handle 22 formed by two half-shells 22a, 22b, on one of which half-shells 22a a window 23 is arranged, from which a driving push button 24 emerges for opening-closing the valve 20. The valve 20 is typically in a closure condition and it is brought to the opening condition by pressing the push button 24. By releasing the push button 24, the valve comes back to the closure condition. A mechanism of this type is widely known in this field of the art, hence it will not be described in more detail.

The dispensing head 21 is interchangeable, as described above.

The operation of the equipment of the invention is driven by a driving and control unit 25 actuatable by the touch-screen 9.

The driving and control unit 25 drives the operation of the water pump 5, the ozone generator 17, and the air pump 34.

The driving and control unit 25 drives the speed of the water pump 5 so as to generate the pulses at the desired frequency or, alternatively, a continuous flow at a predetermined flow rate and pressure.

The driving and control unit 25 also operates on the air pump 34 to adjust the flow and pressure thereof.

Furthermore, the driving and control unit 25 actuates the ozone generator 17 by setting the current and voltage values applied thereto, so as to change the produced amount of ozone.

In addition, the driving and control unit 25 detects malfunctioning events of the hydropulser system 2 and the ozonization system 3. Particularly, the driving and control unit 25:
- reads the current absorbed by the pump 5, detects the absence of water in the reservoir 4 or the failed insertion of the dispensing head 21, and sends a malfunctioning signal to the touch-screen 9, optionally, stops the operativeness of the pump 5;
- reads the current absorbed by the ozone generator 17, detects the degradation of the ozone generator 17, and sends a malfunctioning signal to the touch-screen 9.

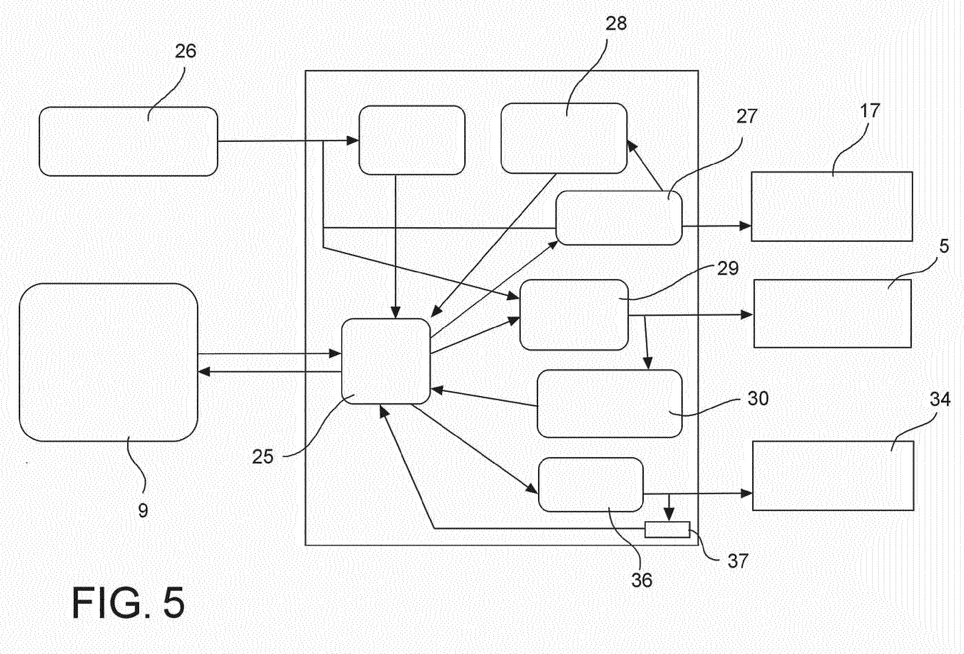

A simplified scheme of the driving and control system of the unit 25 is shown in Fig. 5.

A low-voltage supply system 26 provides the power supply necessary for the operation of the hydropulser system 2, the ozonization system 3, and the driving and control unit 25.

The driving and control unit 25 receives commands from and sends control signals to the touch-screen 9.

The system further comprises:
a) a driver 27 of the ozone generator 17 that sends a control feed-back to a first absorbed current meter 28, which, in turn, sends a control feed-back to the unit 25;
b) a driver 29 of the water pump 5, driven by the unit 25, which sends a control feed-back to a second absorbed current meter 30, which, in turn, sends a control feed-back to the unit 25;
c) a driver 36 of the air pump 34, which sends a control feed-back to a third absorbed current meter 37, which, in turn, sends a control feed-back to the unit 25.

The drivers 27, 29, 36 actuate the ozone generator 17, the water pump 5, and the air pump 34, respectively.

The oral hygiene equipment 1 according to the invention achieves the predetermined objects.

In fact, the use of a centrifugal pump allows obtaining a better control of the pressure delivered by the head 21, while maintaining a constant pressure both during the use and under the closed nozzle condition.

The driving and control unit 25 provides for an accurate control of the operation of the equipment, driving the produced amount of ozone and the flow rate and pressure of the dispensed water flow. Furthermore, the feed-back signals about a malfunctioning of the equipment allow identifying the issues and to solve them, optionally intervening for a replacement of the damaged components.

The equipment of the invention provides a cleaning treatment and at the same time hygienizing for a user's oral cavity without pose no risks, since the released ozone amounts are well below the threshold limits established by the regulations.

## Claims

1. An oral hygiene equipment (1, 101), comprising a hydropulser system (2) to which a ozonization system (3) is connected, the ozonization system (3) comprising an ozone generator (17) and an air pump (34) which provides a ozonized air flow, wherein the ozone generator (17) is connected to an inlet opening (18) of environmental air and it is of the type that produces ozone by electric discharges by a "corona effect", wherein the hydropulser system (2) comprises a water reservoir (4) in flow communication with a water pump (5), the water pump (5) being connected to a treatment device (6) for dispensing a ozonized treatment water flow, wherein said equipment (1) comprises a Venturi effect device (33) in which the mixing of water with the ozonized air flow coming from the ozonization system (3) occurs and wherein the hydropulser system (2) comprises a treatment device (6), said treatment device (6) being connected to the water pump (5) by means of a flexible tube (19) and comprising an opening-closure valve (20) and a dispensing head (21), wherein the dispensing head is interchangeable and comprises a rotary head (21a), **characterised in that** the oral hygiene equipment (1, 101) comprises a driving and control unit (25) actuatable by a touch-screen (9), wherein the driving and control unit (25) performs all the following functions:
- it drives the operation of the water pump (5), the ozone generator (17) and the air pump (34);
- it drives the speed of the water pump (5) so as to generate the pulses with the desired frequency or, alternatively, a continuous flow at a predetermined flow rate and pressure;
- optionally, it drives the speed of the air pump (34) ;
- it drives the ozone generator (17) by setting the current and voltage values applied thereto, so as to change the amount of ozone produced;
- it reads the current absorbed by the water pump (5), detects the absence of water in the reservoir (4) or the failed insertion of the dispensing head (21) and sends a malfunctioning signal to the touch-screen (9), optionally, it stops the operativeness of the water pump (5);
- it reads the current absorbed by the ozone generator (17), detects the degradation of the ozone generator (17), and sends a malfunctioning signal to the touch-screen (9).

2. The equipment (1, 101) according to claim 1, wherein the hydropulser system (2) and the ozonization system (3) are contained in a casing (7) composed of a front half-shell (7a) and a rear half-shell (7b), wherein the rear half-shell (7b) comprises a housing (12) for the water pump (5), wherein a connecting bracket (13), located between the reservoir (4) and the water pump (5) provides for putting the reservoir (4) and the water pump (5) in flow communication, and at the same time for securing the water pump (5) in the housing (12), the connecting bracket (13) comprising a manifold (13a) conveying water to the water pump (5) by a sprout (13b).

3. The equipment (1, 101) according to claim 2, wherein the reservoir (4) is superiorly open to allow the manual loading and topping of water and comprises a hole in the bottom on which an automatic closing valve (14) and a water filter (15) are arranged.

4. The equipment (1, 101) according to any of the claims 1 to 3, wherein the water pump (5) is suitable to dispense a water flow at a pressure of at least 800 mbar.

5. The equipment (1, 101) according to claim 1, wherein air is suctioned with a flow rate up to 1.4 L/min and ozone is produced in amounts ranging between 30 mg/hr and 250 mg/hr.

6. The equipment (101) according to any one of claims 1 to 5, wherein air downstream of the inlet opening (18) is intercepted by an air and moisture filter (35), said filter preferably being of the gore-tex® membrane type.

7. The equipment (101) according to any of the claims 1 to 6, wherein an air pump (34) is located between the filter (35) and the ozone generator (17).

8. The equipment (101) according to any of the claims 1 to 7, wherein the ozone generator (17) is in flow connection upstream of the pump (5) by said Venturi effect device (33), a non-return valve (32) being arranged between said ozone generator (17) and said Venturi effect device (33).

9. The equipment (101) according to any of the claims 1 to 7, wherein said Venturi effect device is arranged downstream of the water pump (5), a non-return valve (32) being arranged between said ozone generator (17) and said Venturi effect device (33).

10. The equipment (1, 101) according to claim 8 or 9, wherein the amount of ozonized air mixed to water ranges from 1% to 50% by volume, with respect to the water volume.

11. The equipment (1, 101) according to any of the claims 1 to 10, wherein an electrovalve (16) is arranged downstream of the water pump (5).

12. The equipment (1, 101) according to any one of claims 1 to 11, wherein the equipment (1, 101) comprises further dispensing heads (21) preferably selected from:
- a massaging head (21b);
- a head with a dispensing nozzle (21c);
- a head with a microjet nozzle (21d).

13. The equipment (1, 101) according to any of the claims 1 to 12, wherein the water pump (5) is a centrifugal pump.

14. The equipment (1) according to any one of claims 1 to 13, wherein the driving and control unit (25) further performs at least one of the following functions:
- it drives the operation of the electrovalve (16), when present;
- optionally, it actuates the electrovalve (16) to generate high-frequency pulses.

15. The equipment (1, 101) according to any one of claims 1 to 14, comprising:
a) a driver (27) of the ozone generator (17) that sends a control feed-back to a first absorbed current meter (28), which, in turn, sends a control feed-back to the unit (25);
b) a driver (29) of the water pump (5), driven by the driving and control unit (25), which sends a control feed-back to a second absorbed current meter (30), which, in turn, sends a control feed-back to the unit (25);
c) optionally, a driver (31) of the electrovalve (16), driven by the driving and control unit (25);
d) optionally, a driver (37) of the air pump (34) driven by the driving and control unit (25), which sends a control feed-back to a third absorbed current meter (36), which, in turn, sends a control feed-back to the unit (25) .

16. The equipment (1, 101) according to any of the claims 1 to 15, wherein the Venturi effect device (33) comprises a main body (40) in which a Venturi tube (41) is obtained with a hourglass-shaped profile, wherein the Venturi tube (41) has an inlet opening (42a) of the water to be treated coming from the pump (5) and an outlet opening (42b) of the ozonized water that is sent into the tube (19), a secondary body (43) being connected to the main body (40), in which a duct (44) is obtained, in which the ozonized air is introduced, wherein the duct (44) opens into the Venturi tube (41) at the section of minimum diameter thereof or immediately upstream thereof.

## Patentansprüche

1. Mundhygieneeinrichtung (1, 101), umfassend ein Wasserpulssystem (2), mit welchem ein Ozonisationssystem (3) verbunden ist, wobei das Ozonisationssystem (3) einen Ozongenerator (17) und eine Luftpumpe (34) umfasst, welche einen ozonisierten Luftstrom bereitstellt, wobei der Ozongenerator (17) mit einer Einlassöffnung (18) von Umgebungsluft verbunden ist und er von dem Typ ist, welcher Ozon durch elektrische Entladungen durch einen "Corona-Effekt" erzeugt, wobei das Wasserpulssystem (2) ein Wasserreservoir (4) umfasst, welches mit einer Wasserpumpe (5) in Strömungsverbindung ist, wobei die Wasserpumpe (5) mit einer Behandlungsvorrichtung (6) zum Abgeben eines ozonisierten Behandlungswasserstroms verbunden ist, wobei die Einrichtung (1) eine Vorrichtung mit Venturieffekt (33) umfasst, in welcher das Mischen von Wasser mit dem ozonisierten Luftstrom, welcher von dem Ozonisationssystem (3) kommt, stattfindet, und wobei das Wasserpulssystem (2) eine Behandlungsvorrichtung (6) umfasst, wobei die Behandlungsvorrichtung (6) mit der Wasserpumpe (5) mittels eines flexiblen Schlauchs (19) verbunden ist und ein Öffnungs-SchließVentil (20) und einen Abgabekopf (21) umfasst, wobei der Abgabekopf austauschbar ist und einen Drehkopf (21a) umfasst, **dadurch gekennzeichnet, dass** die Mundhygieneeinrichtung (1, 101) eine Antriebs- und Regel-/Steuereinheit (25) umfasst, welche durch einen Touchscreen (9) betätigbar ist, wobei die Antriebs- und Regel-/Steuereinheit (25) alle der folgenden Funktionen durchführt:
- sie treibt den Betrieb der Wasserpumpe (5), des Ozongenerators (17) und der Luftpumpe (34) an;
- sie treibt die Geschwindigkeit der Wasserpumpe (5) an, um die Pulse mit der gewünschten Frequenz oder, alternativ, einen kontinuierlichen Strom mit einer vorbestimmten Strömungsrate und einem vorbestimmten Druck zu erzeugen;
- optional treibt sie die Geschwindigkeit der Luftpumpe (34) an;
- sie treibt den Ozongenerator (17) durch Festlegen der Strom- und Spannungswerte an, welche daran angelegt werden, um die Menge von produziertem Ozon zu ändern;
- sie liest den durch die Wasserpumpe (5) absorbierten Strom aus, erfasst die Abwesenheit von Wasser in dem Reservoir (4) oder das fehlgeschlagene Einfügen des Abgabekopfs (21) und sendet ein Fehlfunktionssignal an den Touchscreen (9), optional stoppt sie den Betrieb der Wasserpumpe (5);
- sie liest den durch den Ozongenerator (17) absorbierten Strom aus, erfasst die Verschlechterung des Ozongenerators (17) und sendet ein Fehlfunktionssignal an den Touchscreen (9).

2. Einrichtung (1, 101) nach Anspruch 1, wobei das Wasserpulssystem (2) und das Ozonisationssystem (3) in einem Gehäuse (7) enthalten sind, welches aus einer vorderen Halbschale (7a) und einer hinteren Halbschale (7b) zusammengesetzt ist, wobei die hintere Halbschale (7b) ein Gehäuse (12) für die Wasserpumpe (5) umfasst, wobei eine Verbindungsklammer (13), welche zwischen dem Reservoir (4) und der Wasserpumpe (5) angeordnet ist, ein Setzen des Reservoirs (4) und der Wasserpumpe (5) in Fluidverbindung bereitstellt, und zur gleichen Zeit ein Sichern der Wasserpumpe (5) in dem Gehäuse (12) bereitstellt, wobei die Verbindungsklammer (13) einen Verteiler (13a) umfasst, welcher Wasser zu der Wasserpumpe (5) durch einen Keim (13b) fördert.

3. Einrichtung (1, 101) nach Anspruch 2, wobei das Reservoir (4) oben offen ist, um ein manuelles Beladen und Auffüllen von Wasser zu erlauben, und ein Loch in dem Boden umfasst, an welchem ein automatisches Schließventil (14) und ein Wasserfilter (15) angeordnet sind.

4. Einrichtung (1, 101) nach einem der Ansprüche 1 bis 3, wobei die Wasserpumpe (5) dazu geeignet ist, einen Wasserstrom mit einem Druck von wenigstens 800 mbar abzugeben.

5. Einrichtung (1, 101) nach Anspruch 1, wobei Luft mit einer Strömungsrate von bis zu 1,4 l/min angesaugt wird und Ozon in Mengen produziert wird, welche im Bereich zwischen 30 mg/hr und 250 mg/hr liegen.

6. Einrichtung (101) nach einem der Ansprüche 1 bis 5, wobei Luft stromabwärts der Einlassöffnung (18) durch einen Luft- und Feuchtigkeitsfilter (35) abgefangen wird, wobei der Filter vorzugsweise vom Gore-Tex®-Membrantyp ist.

7. Einrichtung (101) nach einem der Ansprüche 1 bis 6, wobei eine Luftpumpe (34) zwischen dem Filter (35) und dem Ozongenerator (17) angeordnet ist.

8. Einrichtung (101) nach einem der Ansprüche 1 bis 7, wobei der Ozongenerator (17) stromaufwärts der Pumpe (5) durch die Vorrichtung mit Venturieffekt (33) in Strömungsverbindung ist, wobei ein Einwegventil (32) zwischen dem Ozongenerator (17) und der Vorrichtung mit Venturieffekt (33) angeordnet ist.

9. Einrichtung (101) nach einem der Ansprüche 1 bis 7, wobei die Vorrichtung mit Venturieffekt stromabwärts der Wasserpumpe (5) angeordnet ist, wobei ein Einwegventil (32) zwischen dem Ozongenerator (17) und der Vorrichtung mit Venturieffekt (33) angeordnet ist.

10. Einrichtung (1, 101) nach Anspruch 8 oder 9, wobei die Menge von ozonisierter Luft, welche mit Wasser gemischt ist, im Volumenbereich von 1% bis 50% in Bezug auf das Wasservolumen liegt.

11. Einrichtung (1, 101) nach einem der Ansprüche 1 bis 10, wobei ein Elektroventil (16) stromabwärts der Wasserpumpe (5) angeordnet ist.

12. Einrichtung (1, 101) nach einem der Ansprüche 1 bis 11, wobei die Einrichtung (1, 101) weitere Abgabeköpfe (21) umfasst, welche vorzugsweise ausgewählt sind aus:
- einem Massagekopf (21b);
- einem Kopf mit einer Abgabedüse (21c);
- einem Kopf mit einer Mikrostrahl-Düse (21d).

13. Einrichtung (1, 101) nach einem der Ansprüche 1 bis 12, wobei die Wasserpumpe (5) eine Zentrifugalpumpe ist.

14. Einrichtung (1) nach einem der Ansprüche 1 bis 13, wobei die Antriebs-und Regel-/Steuereinheit (25) ferner wenigstens eine der folgenden Funktionen durchführt:
- sie treibt den Betrieb des Elektroventils (16) an, wenn es vorhanden ist;
- optional betätigt sie das Elektroventil (16), um Pulse mit hoher Frequenz zu erzeugen.

15. Einrichtung (1, 101) nach einem der Ansprüche 1 bis 14, umfassend:
a) ein Antriebselement (27) des Ozongenerators (17), welches ein Regel-/Steuer-Feedback an eine erste Messeinheit für absorbierten Strom (28) sendet, welche wiederum ein Regel-/Steuer-Feedback an die Einheit (25) sendet;
b) ein Antriebselement (29) der Wasserpumpe (5), angetrieben durch die Antriebs- und Regel-/Steuereinheit (25), welches ein Regel-/Steuer-Feedback an eine zweite Messeinheit für absorbierten Strom (30) sendet, welche wiederum ein Regel-/Steuer-Feedback an die Einheit (25) sendet;
c) optional, ein Antriebselement (31) des Elektroventils (16), angetrieben durch die Antriebs- und Regel-/Steuereinheit (25);
d) optional, ein Antriebselement (37) der Luftpumpe (34), angetrieben durch die Antriebs- und Regel-/Steuereinheit (25), welches ein Regel-/Steuer-Feedback an eine dritte Messeinheit für absorbierten Strom (36) sendet, welche wiederum ein Regel-/Steuer-Feedback an die Einheit (25) sendet.

16. Einrichtung (1, 101) nach einem der Ansprüche 1 bis 15, wobei die Vorrichtung mit Venturieffekt (33) einen Hauptkörper (40), in welchem eine Venturiröhre (41) mit einem Sanduhr-förmigen Profil erhalten ist, wobei die Venturiröhre (41) eine Einlassöffnung (42a) des zu behandelnden Wassers, welches von der Pumpe (5) kommt, und eine Auslassöffnung (42b) des ozonisierten Wassers umfasst, welches in den Schlauch (19) geschickt wird, einen sekundären Körper (43) umfasst, welcher mit dem Hauptkörper (40) verbunden ist, in welchem eine Leitung (44) erhalten ist, in welche die ozonisierte Luft eingeführt wird, wobei sich die Leitung (44) in die Venturiröhre (41) an dem Bereich eines minimalen Durchmessers davon oder unmittelbar stromaufwärts davon öffnet.

## Revendications

1. Équipement d'hygiène buccale (1, 101), comprenant un système d'hydropropulsion (2) auquel un système d'ozonisation (3) est relié, le système d'ozonisation (3) comprenant un générateur d'ozone (17) et une pompe à air (34) qui fournit un flux d'air ozonisé, dans lequel le générateur d'ozone (17) est relié à une ouverture d'entrée (18) de l'air ambiant et il est du type qui produit de l'ozone par décharges électriques par un « effet corona », dans lequel le système d'hydropropulsion (2) comprend un réservoir d'eau (4) en communication fluidique avec une pompe à eau (5), la pompe à eau (5) étant reliée à un dispositif de traitement (6) pour la distribution d'un flux d'eau de traitement ozonisé, dans lequel ledit équipement (1) comprend un dispositif à effet Venturi (33) dans lequel le mélange d'eau avec le flux d'air ozonisé venant du système d'ozonisation (3) se produit et dans lequel le système d'hydropropulsion (2) comprend un dispositif de traitement (6), ledit dispositif de traitement (6) étant relié à la pompe à eau (5) au moyen d'un tube flexible (19) et comprenant une vanne d'ouverture-fermeture (20) et une tête de distribution (21), dans lequel la tête de distribution est interchangeable et comprend une tête rotative (21a), **caractérisé en ce que** l'équipement d'hygiène buccale (1, 101) comprend une unité d'entraînement et de commande (25) actionnable par un écran tactile (9), dans lequel l'unité d'entraînement et de commande (25) effectue toutes les fonctions suivantes :
- elle entraîne le fonctionnement de la pompe à eau (5), du générateur d'ozone (17) et de la pompe à air (34) ;
- elle commande la vitesse de la pompe à eau (5) de façon à générer les impulsions à la fréquence souhaitée ou, en variante, un flux continu à un débit et une pression prédéterminés ;
- en option, elle commande la vitesse de la pompe à air (34) ;
- elle entraîne le générateur d'ozone (17) par réglage des valeurs de courant et de tension qui y sont appliquées, de façon à changer la quantité d'ozone produite ;
- elle lit le courant absorbé par la pompe à eau (5), détecte l'absence d'eau dans le réservoir (4) ou l'insertion défectueuse de la tête de distribution (21) et envoie un signal de dysfonctionnement à l'écran tactile (9), en option, elle arrête le fonctionnement de la pompe à eau (5) ;
- elle lit le courant absorbé par le générateur d'ozone (17), détecte la dégradation du générateur d'ozone (17) et envoie un signal de dysfonctionnement à l'écran tactile (9).

2. Équipement (1, 101) selon la revendication 1, dans lequel le système d'hydropropulsion (2) et le système d'ozonisation (3) sont contenus dans un carter (7) comprenant une demi-coque avant (7a) et une demi-coque arrière (7b), dans lequel la demi-coque arrière (7b) comprend un boîtier (12) pour la pompe à eau (5), dans lequel un support de liaison (13), situé entre le réservoir (4) et la pompe à eau (5) assure la mise en communication fluidique du réservoir (4) et de la pompe à eau (5), et en même temps la fixation de la pompe à eau (5) dans le boîtier (12), le support de liaison (13) comprenant un collecteur (13a) transportant de l'eau à la pompe à eau (5) par un bec (13b).

3. Équipement (1, 101) selon la revendication 2, dans lequel le réservoir (4) est ouvert au niveau supérieur pour autoriser le chargement manuel et l'appoint d'eau et comprend un trou dans la partie inférieure sur laquelle une vanne de fermeture automatique (14) et un filtre à eau (15) sont agencés.

4. Équipement (1, 101) selon l'une quelconque des revendications 1 à 3, dans lequel la pompe à eau (5) est adaptée pour distribuer un flux d'eau à une pression d'au moins 800 mbar.

5. Équipement (1, 101) selon la revendication 1, dans lequel l'air est aspiré avec un débit allant jusqu'à 1,4 L/min et de l'ozone est produite dans des quantités comprises entre 30 mg/h et 250 mg/h.

6. Équipement (101) selon l'une quelconque des revendications 1 à 5, dans lequel l'air en aval de l'ouverture d'entrée (18) est intercepté par un filtre à air et humidité (35), ledit filtre étant de préférence du type membrane gore-tex®.

7. Équipement (101) selon l'une quelconque des revendications 1 à 6, dans lequel la pompe à air (34) est située entre le filtre (35) et le générateur d'ozone (17).

8. Équipement (101) selon l'une quelconque des revendications 1 à 7, dans lequel le générateur d'ozone (17) est en liaison fluidique en amont de la pompe (5) par ledit dispositif à effet Venturi (33), un clapet anti-retour (32) étant agencé entre ledit générateur d'ozone (17) et ledit dispositif à effet Venturi (33).

9. Équipement (101) selon l'une quelconque des revendications 1 à 7, dans lequel ledit dispositif à effet Venturi est agencé en aval de la pompe à eau (5), un clapet anti-retour (32) étant agencé entre ledit générateur d'ozone (17) et ledit dispositif à effet Venturi (33).

10. Équipement (1, 101) selon la revendication 8 ou 9, dans lequel la quantité d'air ozonisé mélangé à de l'eau va de 1 % à 50 % par volume, par rapport au volume d'eau.

11. Équipement (1, 101) selon l'une quelconque des revendications 1 à 10, dans lequel une électrovanne (16) est agencée en aval de la pompe à eau (5).

12. Équipement (1, 101) selon l'une quelconque des revendications 1 à 11, dans lequel l'équipement (1, 101) comprend en outre des têtes de distribution (21) sélectionnées de préférence à partir de :
- une tête de massage (21b) ;
- une tête avec une buse de distribution (21c) ;
- une tête avec une buse microjet (21d).

13. Équipement (1, 101) selon l'une quelconque des revendications 1 à 12, dans lequel la pompe à eau (5) est une pompe centrifuge.

14. Équipement (1) selon l'une quelconque des revendications 1 à 13, dans lequel l'unité d'entraînement et de commande (25) réalise en outre au moins une des fonctions suivantes :
- elle entraîne le fonctionnement de l'électrovanne (16), lorsqu'elle est présente ;
- en option, elle actionne l'électrovanne (16) pour générer des impulsions haute fréquence.

15. Équipement (1, 101) selon l'une quelconque des revendications 1 à 14, comprenant :
a) un dispositif d'entraînement (27) du générateur d'ozone (17) qui envoie un retour d'information de commande à un premier dispositif de mesure de courant absorbé (28), qui, à son tour, envoie un retour d'information de commande à l'unité (25) ;
b) un dispositif d'entraînement (29) de la pompe à eau (5), entraîné par l'unité d'entraînement et de commande (25), qui envoie un retour d'information de commande à un deuxième dispositif de mesure de courant absorbé (30), qui, à son tour, envoie un retour d'information de commande à l'unité (25) ;
c) en option, un dispositif d'entraînement (31) de l'électrovanne (16), entraînée par l'unité d'entraînement de commande (25) ;
d) en option, un dispositif d'entraînement (37) de la pompe à air (34) entraînée par l'unité d'entraînement et de commande (25), qui envoie un retour d'information de commande à un troisième dispositif de mesure de courant absorbé (36), qui, à son tour, envoie un retour d'information de commande à l'unité (25).

16. Équipement (1, 101) selon l'une quelconque des revendications 1 à 15, dans lequel le dispositif à effet Venturi (33) comprend un corps principal (40) dans lequel un tube venturi (41) est obtenu avec un profil en forme de sablier, dans lequel le tube Venturi (41) a une ouverture d'entrée (42a) de l'eau à traiter venant de la pompe (5) et une ouverture de sortie (42b) de l'eau ozonisée qui est envoyée dans le tube (19), un corps secondaire (43) étant relié au corps principal (40), dans lequel un conduit (44) est obtenu, dans lequel l'air ozonisé est introduit, dans lequel le conduit (44) s'ouvre dans le tube Venturi (41) à la section de diamètre minimum de celui-ci ou immédiatement en amont de celui-ci.
